# EUROPÄISCHE PATENTSCHRIFT

(11) **EP 0 760 760 B1**
(45) Veröffentlichungstag und Bekanntmachung des Hinweises auf die Patenterteilung: **31.03.1999**
(21) Anmeldenummer: 95919357.4
(22) Anmeldetag: 28.04.1995
(51) Int. Cl.: B60S 1/34

(54) **WISCHARM FÜR SCHEIBENREINIGUNGSANLAGEN AN KRAFTFAHRZEUGEN**
WIPER ARM FOR MOTOR VEHICLE WINDSCREEN WIPER SYSTEMS
BRAS D'ESSUIE-GLACE POUR SYSTEME D'ESSUIE-GLACE DE VEHICULES A MOTEUR

(30) Priorität: 20.05.1994 DE 4417714
(43) Veröffentlichungstag der Anmeldung: 12.03.1997
(73) Patentinhaber: ITT Automotive Europe GmbH, 60488 Frankfurt (DE)
(72) Erfinder: EDELE, Reinhard, D-74321 Bietigheim-Bissingen (DE); KRIZEK, Oldrich, D-74321 Bietigheim-Bissingen (DE); SCHMID, Eckhardt, D-74336 Brackenheim (DE)
(74) Vertreter: Dreiss, Fuhlendorf, Steimle & Becker
(86) Internationale Anmeldenummer: EP9501622
(87) Internationale Veröffentlichungsnummer: WO9532111

(56) Entgegenhaltungen:
- DE-A- 2 830 507
- DE-A- 3 917 483
- FR-A- 1 342 007
- GB-A- 2 142 223

## Beschreibung

Die Erfindung bezieht sich auf einen Wischarm für Scheibenwischanlagen an Kraftfahrzeugen mit den Merkmalen des Oberbegriffs des Anspruchs 1.

Aus dem Zusatzpatent Nr. 85 427 zu der FR-A-1 342 007 ist eine Scheibenreinigungsanlage für Kraftfahrzeuge bekannt, bei der ein Wischarm und ein parallel dazu ausgerichteter Führungsarm über ein Koppelglied zu einem Parallelogramm ergänzt sind, wobei an diesem Koppelglied das Wischblatt schwenkbar aufgehängt ist. An dem Koppelglied sind im Abstand voneinander zwei Lagerbolzen vorgesehen, die jeweils in einer als Kunststoffteil gefertigten Lagervorrichtung mit einer topfförmig ausgebildeten Lagerbuchse angeordnet und gehalten sind. Die Lagerbuchse weist einen länglichen, seitlich abstehenden Befestigungsteil auf mit einem längsseitig offenen Kanal auf. Der Befestigungsteil ist auf das freie Ende der zu dem wischarm oder Führungsarmarm gehörenden Wischstange aufgesteckt und mit zwei Nieten, welche fluchtende Bohrungen in der Wischstange und den Wänden des Befestigungsteiles durchdringen, an dieser befestigt ist. Um den Lagerbolzen gegen Herausrutschen aus der Lagerbuchse in axialer Richtung zu sichern, ist in der Lagerbuchse ein Stift tangential zu dem Lagerbolzen angeordnet, der mit einem Teil seines Querschnittes in eine am freien Ende des Lagerbolzens ausgebildete Umfangsnut mit rechteckigem Querschnitt eingreift.

Aus der DE-A-28 30 507 ist ein Wischarm mit einer aus Kunststoff gefertigten Lagervorrichtung bekannt, die mit einem einen länglichen, umfangsseitig geschlossenen Kanal aufweisenden Befestigungsteil auf das frei Ende der zu dem Wischarm gehörenden Wischstange aufgesteckt und mit dieser verrastet ist. Die Lagervorrichtung besitzt eine quer zur Breite der Wischstange verlaufende, durchgehende Bohrung, in der ein Lagerbolzen gelagert ist. Der Lagerbolzen ist von einer Seite her derartig in die Bohrung der Lagervorrichtung eingesteckt, daß er mit einem Bund an dem hinteren Ende an dem Rand der Bohrung anliegt. Das vordere, aus der Bohrung herausragende Ende des Lagerbolzens ist dann in einer Durchgangsbohrung am Ende eines Führungsarmes durch Vernieten befestigt.

Die Herstellung eines Wischarmes einer der vorbeschriebenen Arten ist zu aufwendig und zu teuer.

Der vorliegenden Erfindung liegt daher die Aufgabe zugrunde, einen Wischarm der eingangs beschriebenen Art so weiterzubilden, daß er kostengünstiger herstellbar ist, ohne daß darunter die Funktion leidet.

Diese Aufgabe wird bei einem Wischarm für Scheibenreinigungsanlagen an Kraftfahrzeugen mit einer aus einem Flachbandstahl bestimmter Breite und Dicke hergestellten Wischstange, die auf der einen Seite an einem Gelenkteil befestigt ist und die an dem freien Ende eine als Kunststoffteil gefertigte Lagervorrichtung mit einer topfförmig ausgebildeten Lagerbuchse für einen Gelenkzapfen trägt, welche einen länglichen, seitlich abstehenden Befestigungsteil aufweist, mit welchem die Lagervorrichtung auf das freie Ende der Wischstange aufgesteckt und an dieser befestigt ist, dadurch gelöst, daß die Lagerbuchse quer zur Breite der Wischstange ausgerichtet ist und daß die Lagervorrichtung Rastelemente für die axiale Fixierung der Lagerbuchse an dem Gelenkzapfen besitzt, die mit korrespondierenden Rastelementen am Gelenkzapfen bzw. an dem den Gelenkzapfen tragenden Bauteil in Eingriff bringbar sind und daß der längliche, seitlich abstehende Befestigungsteil eine Befestigungshülse ist, mit welcher die Lagervorrichtung auf das freie Ende der Wischstange aufgesteckt und an dieser verrastet ist.

Heutzutage sind solche Kunststoffteile wie die Lagervorrichtung äußerst billig in Massenprodukten herstellbar, wobei sich für eine insgesamt einstückige Herstellung eines solchen Kunststoffteiles das Spritzgießen besonders eignet.

Die Wischstange selbst ist ebenfalls sehr einfach und kostengünstig herzustellen. Das Wischstangenmaterial braucht nur in der erforderlichen Länge von dem als Meterware oder als Rolle angelieferten Flachbandstahl abgetrennt zu werden. Bei Verwendung eines entsprechend gestalteten Schneid-Stanz-Werkzeuges kann an dem freien Ende der Wischstange beim Trennvorgang gleichzeitig ein Rastmittel für die Befestigungshülse der Lagervorrichtung geformt werden.

Auch die Montage der Lagervorrichtung am freien Ende der Wischstange gestaltet sich vorteilhaft einfach in einem einzigen Arbeitsgang. Außerdem ist die Möglichkeit gegeben, erforderlichenfalls die gesamte Lagervorrichtung ohne großen Aufwand wieder zu entfernen und durch eine neue zu ersetzen.

Um ein einfaches und unkompliziertes Verrasten der Lagervorrichtung mit der Befestigungshülse auf dem freien Ende der Wischstange zu ermöglichen, empfiehlt es sich, an der Befestigungshülse wenigstens ein Rastelement, insbesondere in Form einer Rastfeder bzw. Federzunge vorzusehen, welche beim Aufstecken der Rasthülse auf das Wischstangenende selbsttätig mit einem korrespondierenden Rastelement, vorzugsweise einer herausgeprägten Rastnase, an der Wischstange in Eingriff gelangt.

Um eine ordnungsgemäße Führung des Wischblattes zu gewährleisten, sollte die Lagervorrichtung fest und möglichst spielfrei an der Wischstange befestigt sein. Deshalb sind insbesondere zum Ausgleich von Toleranzen gemäß einer vorteilhaften Ausgestaltung an den Innenseiten der Befestigungshülse, deren freier Querschnitt im wesentlichen dem Querschnitt der Wischstange entspricht, einwärtsragende Profile vorgesehen.

Die an der Lagervorrichtung für die Fixierung der Lagerbuchse an dem Gelenkzapfen vorgesehenen Rastelemente können vorteilhaft radial einwärts gerichtete Segmente eines Ringwulstes an der Innenseite der Lagerbuchse sein, die mit einer entsprechenden ringförmigen Vertiefung in der Mantelfläche des Gelenkzapfens in Eingriff bringbar sind. Damit ist mit geringstem Montageaufwand eine axial gesicherte Rastverbindung zwischen Lagerbuchse und Gelenkzapfen herstellbar, welche die erforderliche Verdrehbarkeit des Gelenkzapfens in der Lagerbuchse gewährleistet.

Gemäß einer weiteren vorteilhaften Ausgestaltung soll das radiale Ausweichen der Segmente des Ringwulstes bei der Montage der Lagerbuchse auf dem Gelenkzapfen gewährleistet werden, um das Aufrasten der Lagerbuchse auf den Gelenkzapfen zu erleichtern und dabei Beschädigungen, insbesondere an den Segmenten des Ringwulstes zu vermeiden. Dazu weist die Lagerbuchse in den Bereichen der Segmente des Ringwulstes segmentartige Freisparungen auf, die sich vom offenen Ende bis an die Innenseite des geschlossenen Endes der topfförmigen Lagerbuchse erstrecken. Die als Rastelemente fungierenden Segmente des Ringwulstes befinden sich also an der Innenseite von Wandsegmenten eines Hohlzylinders, und die Wandsegmente sind in der Lage, beim Einpressen des Gelenkzapfens auf Grund der vorhandenen Freisparungen elastisch nach radial auswärts auszuweichen. Das ermöglicht ebenfalls eine zerstörungsfreie Demontage der Lagerverbindung bei entsprechend vorsichtiger Kraftaufbringung in axialer Richtung der Lagerbuchse bzw. des Gelenkzapfens.

Bei Verwendung einer topfförmig ausgebildeten Lagerbuchse ist ein Ende der Lagerbuchse bereits gegen das Eindringen von für die Leichtgängigkeit des Gleitlagers schädlichem Schmutz oder Feuchtigkeit geschützt. Um einen solchen Schutz für das Gleitlager auch am offenen Ende der Lagerbuchse sicherzustellen, weist die Lagerbuchse an ihrem offenen Ende eine erweiterte zylindrische Öffnung auf. An der Wand dieser erweiterten zylindrischen Öffnung ist ein ringförmiger Dichtwulst vorgesehen, der vorzugsweise einstückig an die Innenseite dieser Öffnung angeformt ist. Dieser Dichtwulst könnte natürlich auch durch einen in eine Ringnut eingelegten Dichtungsring ersetzt werden. Der Dichtwulst kommt beim Aufrasten der Lagerbuchse auf den Gelenkzapfen an einem erweiterten zylindrischen Basisteil des Gelenkzapfens dichtend zur Anlage.

Damit einerseits eine ausreichende Dichtung gewährleistet aber andererseits nicht ein zu hoher radialer Anpreßdruck des Dichtwulstes zur Schwergängigkeit des Gleitlagers führt, ist es vorteilhaft, wenn die Lagerbuchse eine koaxial zu der erweiterten zylindrischen Öffnung angeordnete, axial offene, umlaufende Ringnut besitzt. Diese Ringnut, die als Freisparung wirkt, ermöglicht ein elastisches radiales Ausweichen des ringförmigen Dichtwulstes. Der Dichtwulst befindet sich also gewissermaßen an der Innenseite einer hohlzylindrischen Wand, die in einem bestimmten Maß federelastisch aufweitbar ist.

An Hand eines Ausführungsbeispieles wird die Erfindung nachfolgend näher beschrieben. In den zugehörigen Zeichnungen zeigen
- Fig. 1: eine Ansicht auf den Wischarm, den Steuerarm und das Koppelglied einer sogenannten Parallelwischanlage,
- Fig. 2: eine Ansicht des Koppelgliedes in vergrößerter Darstellung,
- Fig. 3: das freie Ende einer Wischstange, Ansicht von unten,
- Fig. 4: das freie Ende einer Wischstange, Ansicht in Schnittdarstellung,
- Fig. 5: das freie Ende einer Wischstange, Ansicht von oben,
- Fig. 6: einen Schnitt VI - VI aus Figur 4 in vergrößerter Darstellung,
- Fig. 7: einen Abschnitt der Lagervorrichtung in weiter vergrößerter Darstellung, Ansicht von unten,
- Fig. 8: einen Schnitt VIII - VIII aus Figur 7.

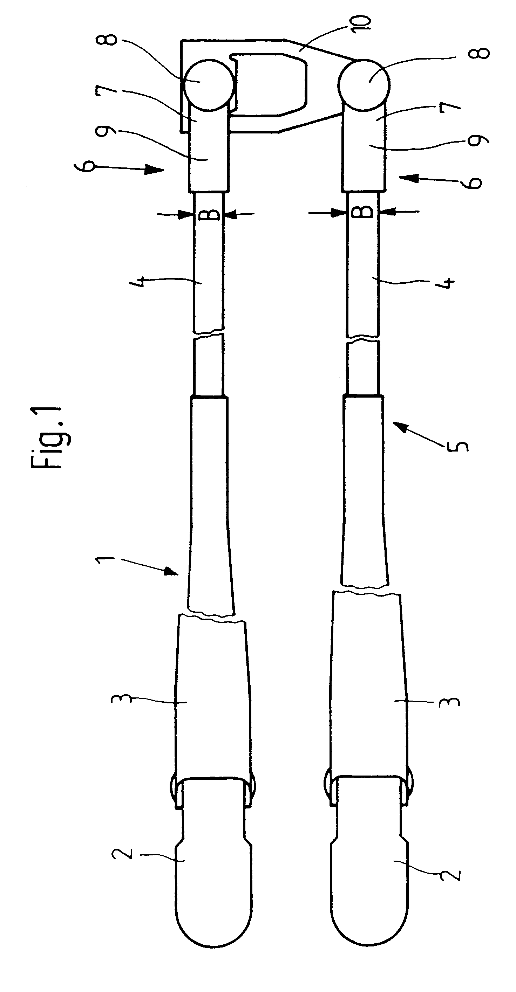

In Figur 1 ist mit 1 der angetriebene Wischarm einer Scheibenreinigungsanlage bezeichnet, zu dem in bekannter Weise ein Befestigungsteil 2, ein Gelenkteil 3 und eine Wischstange 4 gehört. Der insgesamt mit 5 bezeichnete Führungsarm ist in gleicher Weise aufgebaut. Die Wischstange 4 ist jeweils aus einem Flachbandstahl bestimmter Breite B und bestimmter Dicke D hergestellt und auf der einen Seite an dem Gelenkteil 3 befestigt. Auf dem freien Ende 6 jeder Wischstange 4 ist eine Lagervorrichtung 7 angeordnet und an der Wischstange 4 verrastet. Die Lagervorrichtung 7 ist ein durch Spritzgießen insgesamt einstückig hergestelltes Kunststoffteil und besteht im wesentlichen aus einer topfförmigen Lagerbuchse 8 mit einer seitlich abstehenden Befestigungshülse 9.

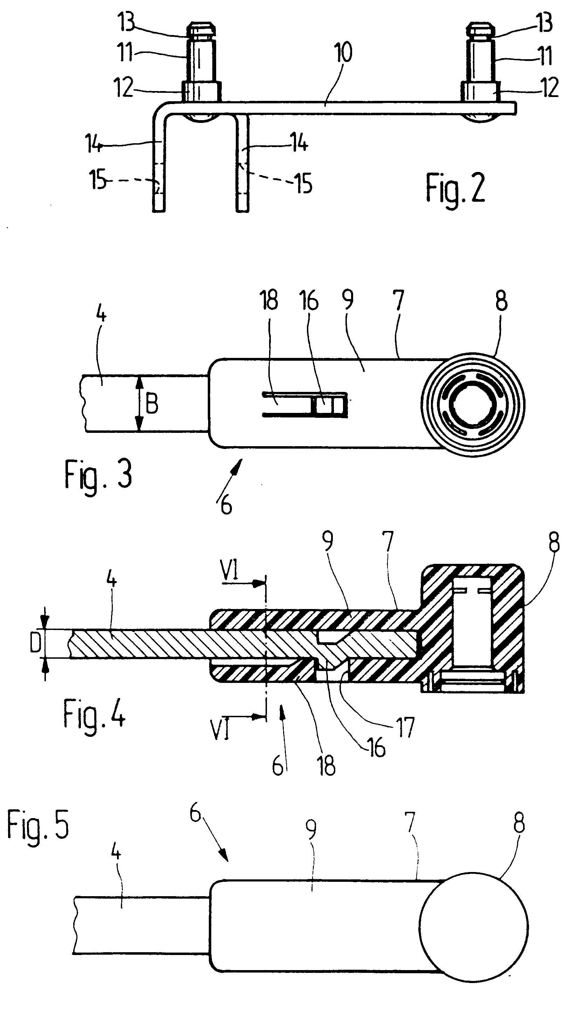

Beide Wischstangen 4, also sowohl die des Wischarmes 1 als auch die des Führungsarmes 5, sind über die Lagervorrichtungen 7 schwenkbar an einem die freien Enden 6 beider Wischstangen 4 verbindenden Koppelglied 10 angelenkt. Dabei sind die Lagerbuchsen 8 quer zur Breite B der Wischstangen 4 ausgerichtet und nehmen jeweils einen Gelenkzapfen 11 (Fig. 2) auf, die an dem Koppelglied 10 in einem Abstand voneinander vernietet sind.

Beim Betreiben der Parallelwischanlage werden der Wischarm 1 und der Führungsarm 5 parallel zueinander in der Zeichnungsebene seitlich verschwenkt. Der Wischarm 1, der Führungsarm 5 und das Koppelglied 10 bilden dabei gewissermaßen ein sich veränderndes Parallelogramm, wobei das Koppelglied 10 immer im wesentlichen parallel zu sich selbst verschoben wird. Dadurch wird auch ein nicht dargestelltes, am Koppelglied 10 angebrachtes Wischblatt auf der zu reinigenden Scheibe parallel zu sich selbst verschoben.

Aus Figur 2 ist der Aufbau des aus Blech hergestellten Koppelgliedes 10 ersichtlich. In einem Abstand voneinander sind die Gelenkzapfen 11 parallel zueinander an dem Blechteil des Koppelgliedes 10 vernietet. Die Gelenkzapfen 11 besitzen einen erweiterten zylindrischen Basisteil 12, und in der Nähe des dem Basisteil 12 gegenüberliegenden freien Endes ist eine umlaufende Ringnut 13 in den Gelenkzapfen 11 eingestochen, die als Rastelement für die Lagerbuchse 8 dient. Aus der Ebene des Bleches sind zwei Abschnitte 14 rechtwinklig nach unten herausgebogen und bilden eine nach unten offene im Querschnitt U-förmige Aufnahme für ein Wischblatt, welches mittels eines nicht dargestellten Bolzens in den fluchtenden Bohrungen 15 an dem Koppelglied 10 angelenkt werden kann.

Aus den Figuren 3 bis 5 sind die Lage und insbesondere die Art der Befestigung der Lagervorrichtung 7 an dem freien Ende 6 der Wischstange 4 ersichtlich, wobei die Wischstange 4 von Wischarm 1 und Führungsarm 5 sowie beide Lagervorrichtungen 7 gleich sind.

Die Wischstange 4 aus Flachbandstahl vorgegebener Breite B und Dicke D ist an ihrem freien Ende 6 mit einer von der Unterseite abstehenden starren Rastnase 16 versehen, welche in einem Arbeitsgang mit dem Abtrennen der Wischstange 4 von dem Ausgangsmaterial hergestellt ist. Die Rastnase 16 hat eine in Einschubrichtung der Wischstange 4 vornliegende Auflaufschräge. In die Unterseite der Befestigungshülse 9 ist eine Aufnahmeöffnung 17 für die Rastnase 16 eingearbeitet, und außerdem ist eine an der Aufnahmeöffnung 17 endende Rastfeder 18 aus der Unterseite der Befestigungshülse 9 freigespart. Die Rastfeder 18 besitzt ebenfalls eine in Einschubrichtung vornliegende Auflaufschräge für die Rastnase 16 der Wischstange 4.

Beim Einschieben des freien Endes 6 der Wischstange 4 in die Befestigungshülse 9 der Lagervorrichtung 7 wird die Rastfeder 18 zunächst federelastisch nach unten ausgelenkt und nimmt dann hinter der Rückseite der Rastnase 16 seine ursprüngliche Lage wieder ein. Die Lagervorrichtung 7 wird durch diese wieder lösbare Rastverbindung ausreichend sicher auf dem freien Ende 6 der Wischstange 4 gehalten.

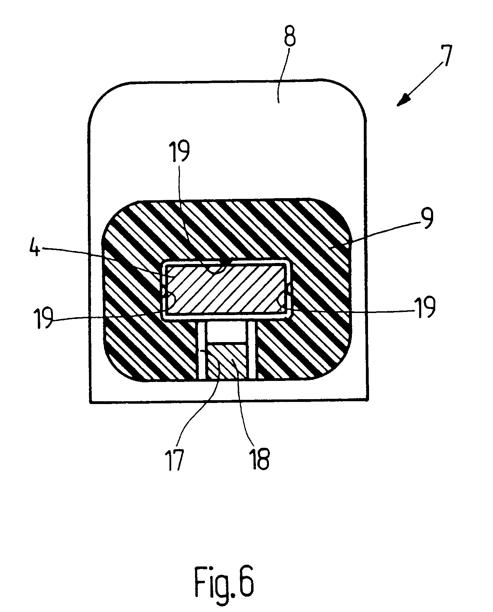

Aus Figur 6 ist ersichtlich, daß der freie Querschnitt der Befestigungshülse 9 im wesentlichen dem Querschnitt der Wischstange 4 entspricht. Der Spalt zwischen der Wischstange 4 und der Innenseite der Befestigungshülse 9 ist in der Zeichnung unverhältnismäßig groß dargestellt, in der Praxis ist er tatsächlich kleiner. Zum Ausgleich des im wesentlichen aufgrund von Toleranzen auftretenden Spieles sind an den Innenseiten der Befestigungshülse 9 einwärtsragende Profile 19 vorhanden. Im Falle des Ausführungsbeispieles erstreckt sich als spielausgleichendes Profil 19 an jeder Innenseite der Befestigungshülse 9 eine hervorstehende Rippe in Längsrichtung der Befestigungshülse 9. Um ein Kippen der Befestigungshülse 9 und damit auch der Lagerbuchse 8 gegenüber der Wischstange 4 mit Sicherheit auszuschließen, können auf den Innenseiten der Befestigungshülse 9 auch jeweils mehrere spielausgleichende Profile 19 vorgesehen sein, wobei diese auch in Querrichtung oder anders verlaufen können. In dem Querschnitt VI - VI ist außerdem noch die Rastfeder 18 zu erkennen, die hier die Rastnase 16 der Wischstange 4 und die in der Unterseite der Befestigungshülse 9 vorhandene Aufnahmeöffnung 17 für die Rastnase 16 im wesentlichen verdeckt.

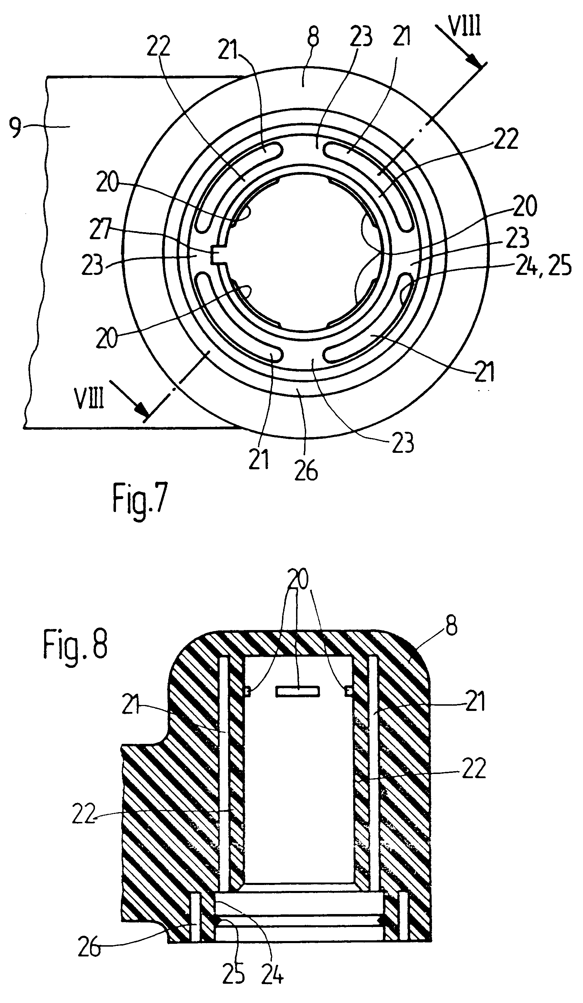

In den Figuren 7 und 8 sind auf Grund der vergrößerten Darstellung die Einzelheiten der Lagerbuchse 8 zu erkennen. Nahe dem geschlossenen Ende der topfförmigen Lagerbuchse 8 sind an der Innenseite vier Segmente 20 eines radial einwärts abstehenden Ringwulstes zu sehen. Diese Segmente 20 sind so gestaltet, daß sie in das als Ringnut 13 ausgebildete Rastelement des Gelenkzapfens 11 eingreifen können und so eine Rastverbindung zwischen Gelenkzapfen 11 und Lagervorrichtung 7 herstellen, wobei der Gelenkzapfen 11 gegenüber der Lagerbuchse 8 ohne großen Kraftaufwand verdrehbar ist. Um das Herstellen und auch das Trennen der Rastverbindung einfach zu gestalten, weist die Lagerbuchse 8 jeweils im Bereich eines Segmentes 20 des Ringwulstes eine segmentartige Freisparung 21 auf, die sich von dem offenen Ende der Lagerbuchse 8 bis an die Innenseite des verschlossenen Endes erstreckt. Bei der Montage der Lagerbuchse 8 auf dem Gelenkzapfen 7 bzw. auch bei der Demontage können die Segmente 20 gemeinsam mit der durch die Freisparungen 21 gebildeten Wandsegmente 22 federelastisch radial auswärts ausweichen.

Diese Ausgestaltung, bei der die Segmente 20 nahe dem geschlossenen Ende der Lagerbuchse 8 angeordnet sind, hat noch einen besonderen Vorteil. Es können nämlich herkömmliche Koppelglieder 10, bei denen der Gelenkzapfen 11 nahe seinem freien Ende eine Ringnut 13 aufweist, welche zur axialen Sicherung einer bekannten Lagerbuchse einen Sicherungsring aufnehmen kann, mit erfindungsgemäßen Wischarmen 1 bzw. Führungsarmen 5 kombiniert werden.

Durch die Freisparungen 21 erhalten die Wandsegmente 22 ausreichende federelastische Beweglichkeit, aber andererseits ist durch die verbleibenden Verbindungsstege 23 die für die ordnungsgemäße und sichere Funktion des Gleitlagers benötigte Stabilität und Stützfunktion der Lagerbuchse 8 gewährleistet.

Aus den Figuren 7 und 8 ist weiterhin eine erweiterte zylindrische Öffnung 24 am offenen Ende der Lagerbuchse 8 ersichtlich, die an der Innenseite einen umlaufenden ringförmigen Dichtwulst 25 aufweist. Dieser Dichtwulst 25 liegt bei in die Lagerbuchse 8 eingesetztem Gelenkzapfen 11 dichtend an dem erweiteren zylindrischen Basisteil 12 des Gelenkzapfens 11 an und verhindert, daß Schmutz und Feuchtigkeit in das Innere des Gleitlagers gelangen können. Eine stirnseitig offene, koaxial zu der erweiterten zylindrischen Öffnung 24 angeordnete, umlaufende Ringnut 26 ermöglicht ein elastisches radiales Ausweichen des ringförmigen Dichtwulstes 25. Der erweiterte zylindrische Basisteil 12 des Gelenkzapfens 11 hat in Bezug auf den freien Querschnitt im Bereich des Dichtwulstes 25 geringfügiges Übermaß. Dadurch wird eine sichere Abdichtung erreicht ohne daß die Leichtgängigkeit des Gelenkzapfens 11 in der Lagerbuchse 8 wesentlich beeinflußt würde. Auf weitere Abdichtmaßnahmen kann verzichtet werden.

In der Praxis ist es allgemein üblich , derartige Schwenklager mit einer Dauerschmierung zu versehen. Dazu wird der Gelenkzapfen 11 und/oder der Innenraum der Lagerbuchse 8 vor der Montage befettet. Um bei der Montage der Lagerbuchse 8 auf dem Gelenkzapfen 11 das im Innenraum der Lagerbuchse 8 befindliche und sich komprimierende Luftpolster entweichen zu lassen , ist, wie aus Figur 7 ersichtlich, im Bereich eines Verbindungssteges 23 eine Entlüftungsnut 27 eingearbeitet. Nach dem Entweichen des Luftpolsters kann sich Schmierfett in dieser Entlüftungsnut 27 ablagern, womit diese Entlüftungsnut 27 dann die Funktion eines Schmiermittelspeichers erfüllt. Zur weiteren Verbesserung der Dauerschmierung können auch mehrere solcher Entlüftungsnuten 27 über den Umfang verteilt in die Gleitfläche der Lagerbuchse 8 eingearbeitet sein.

## Patentansprüche

1. Wischarm für Scheibenreinigungsanlagen an Kraftfahrzeugen mit einer aus einem Flachbandstahl bestimmter Breite (B) und Dicke (D) hergestellten Wischstange (4), die auf der einen Seite an einem Gelenkteil (3) befestigt ist und die an dem freien Ende (6) eine als Kunststoffteil gefertigte Lagervorrichtung (7) mit einer topfförmig ausgebildeten Lagerbuchse (8) für einen Gelenkzapfen (11) trägt, welche einen länglichen, seitlich abstehenden Befestigungsteil aufweist, mit welchem die Lagervorrichtung (7) auf das freie Ende (6) der Wischstange (4) aufgesteckt und an dieser befestigt ist, dadurch **gekennzeichnet**, daß die Lagerbuchse (8) quer zur Breite (B) der Wischstange (4) ausgerichtet ist und daß die Lagervorrichtung (7) Rastelemente für die axiale Fixierung der Lagerbuchse (8) an dem Gelenkzapfen (11) besitzt, die mit korrespondierenden Rastelementen am Gelenkzapfen (11) bzw. an dem den Gelenkzapfen (11) tragenden Bauteil in Eingriff bringbar sind und daß der längliche, seitlich abstehende Befestigungsteil eine Befestigungshülse (9) ist, mit welcher die Lagervorrichtung (7) auf das freie Ende (6) der Wischstange (4) aufgesteckt und an dieser verrastet ist.

2. Wischarm nach Anspruch 1, dadurch **gekennzeichnet**, daß die Befestigungshülse (9) wenigstens ein Rastelement, vorzugsweise eine Rastfeder (18) aufweist, die mit einem korrespondierenden Rastelement, vorzugsweise einer Rastnase (16), an der Wischstange (4) in Eingriff steht.

3. Wischarm nach einem der vorhergehenden Ansprüche, dadurch **gekennzeichnet**, daß der freie Querschnitt der Befestigungshülse (9) im wesentlichen dem Querschnitt der Wischstange (4) entspricht, wobei an den Innenseiten der Befestigungshülse (9) einwärtsragende Profile (19) für den Spielausgleich zwischen Befestigungshülse (9) und Wischstange (4) vorgesehen sind.

4. Wischarm nach einem der vorhergehenden Ansprüche, dadurch **gekennzeichnet**, daß die Lagerbuchse (8) an ihrer Innenseite Segmente (20) eines radial einwärts gerichteten Ringwulstes aufweist, die mit einer entsprechenden ringförmigen Vertiefung in der Mantelfläche des Gelenkzapfens (11) in Eingriff bringbar sind.

5. Wischarm nach Anspruch 4, dadurch **gekennzeichnet**, daß die Lagerbuchse (8) in den Bereichen der Segmente (20) eines Ringwulstes segmentartige Freisparungen (21) aufweist, die sich vom offenen Ende bis zur Innenseite des geschlossenen Endes der topfförmigen Lagerbuchse (8) erstrecken und die ein elastisches, radiales Ausweichen der Segmente (20) bei der Montage der Lagerbuchse (8) auf den Gelenkzapfen (11) ermöglichen.

6. Wischarm nach einem der vorhergehenden Ansprüche, dadurch **gekennzeichnet**, daß die Lagerbuchse (8) an ihrem offenen Ende eine erweiterte zylindrische Öffnung (24) aufweist und daß diese erweiterte zylindrische Öffnung (24) einen ringförmigen Dichtwulst (25) besitzt, der an einem erweiterten zylindrischen Basisteil (12) des Gelenkzapfens (11) dichtend zur Anlage kommt.

7. Wischarm nach Anspruch 6, dadurch **gekennzeichnet**, daß die Lagerbuchse (8) an ihrem offenen Ende eine stirnseitig offene, koaxial zu der erweiterten zylindrischen Öffnung (24) angeordnete, umlaufende Ringnut (26) aufweist, die ein elastisches radiales Ausweichen des ringförmigen Dichtwulstes (25) ermöglicht.

8. Wischarm nach einem der vorhergehenden Ansprüche, dadurch **gekennzeichnet**, daß die Lagervorrichtung (7) insgesamt einstückig als Spritzgußteil hergestellt ist.

## Claims

1. Wiper arm for windshield-washing systems on motor vehicles, with a wiper rod (4) manufactured from flat strip steel of defined width (B) and thickness (D) which is connected at one end to an articulation part (3) and supports at its free end (6) a bearing device (7) which is a plastic component with a bearing bushing (8) constructed in a pot shape for an articulation pin (11) having an elongated, laterally projecting fastening element with which the bearing device (7) is inserted over the free end (6) of the wiper rod (4) and fixed in place thereon, characterized in that the bearing bushing (8) is oriented perpendicular to the width (B) of the wiper rod (4), that the bearing device (7) possesses catch elements for the axial fixation of the bearing bushing (8) on the articulation pin (11), which can be brought into engagement with corresponding catch elements on the articulation pin (11) or the component supporting the articulation pin (11) and that the elongated, laterally projecting fastening element is a fastening sleeve (9), with which the bearing device (7) is inserted over the free end (6) of the wiper rod (4) and locked in place thereon.

2. Wiper arm according to Claim 1, characterized in that the fastening sleeve (9) has at least one catch element, preferably a spring catch (18) which engages with a corresponding catch element, preferably a catch lug (16), on the wiper rod (4).

3. Wiper arm according to one of the preceding claims, characterized in that the free cross section of the fastening sleeve (9) essentially corresponds to the cross section of the wiper rod (4), with inward-projecting profiles (19) for compensation of play between fastening sleeve (9) and wiper rod (4) provided on the interior sides of the fastening sleeve (9).

4. Wiper arm according to one of the preceding claims, characterized in that, on its inside, the bearing bushing (8) has segments (20) of radially inward directed annular lips that can be brought into engagement with a correspondingly annular recess in the outer surface of the articulation pin (11).

5. Wiper arm according to Claim 4, characterized in that, in the vicinity of the segments (20) of an annular lip, the bearing bushing (8) has relief cuts (21) which extend from the open end to the inside of the closed end of the pot-shaped bearing bushing (8) and permit an elastic yielding of the segments (20) in the mounting of the bearing bushing (8) on the articulation pin (11).

6. Wiper arm according to one of the preceding claims, characterized in that, at its open end, the bearing bushing (8) has an expanded cylindrical opening (24) and in that this expanded cylindrical opening (24) has an annular sealing lip (25) which makes sealing contact on an expanded base part (12) of the articulation pin (11).

7. Wiper arm according to Claim 6, characterized in that, at its open end, the bearing bushing (8) has an annular groove (26), open towards the end surface and arranged coaxially to the expanded cylindrical opening (24), that permits an elastic radial yielding of the annular sealing lip (25).

8. Wiper arm according to one of the preceding claims, characterized in that the bearing device (7) is produced in one piece as an injection-molded part.

## Revendications

1. Bras d'essuie-glace, pour essuie-glace de véhicule automobile, comprenant une tige d'essuie-glace (4) qui est réalisée dans un ruban plat en acier de largeur (B) et épaisseur (D) déterminées et qui est fixée d'un premier côté à une pièce d'articulation (3) et porte, à son extrémité libre (6), un dispositif de palier (7) formé d'une pièce en matière plastique et comportant une douille de palier (8) en forme de cuvette qui est prévue pour un pivot d'articulation (11) et comporte une partie de fixation allongée qui fait saillie sur le côté et par laquelle le dispositif de palier (7) est emboîté sur l'extrémité libre (6) de la tige d'essuie-glace (4) et est fixé à celle-ci, caractérisé en ce que la douille de palier (8) est orientée transversalement à la largeur (B) de la tige d'essuie-glace (4), en ce que le dispositif de palier (7) comporte des éléments d'enclenchement qui servent à l'immobilisation axiale de la douille de palier (8) sur le tourillon (11) et peuvent être amenés en prise avec des éléments d'enclenchement correspondants prévus sur le pivot d'articulation (11) ou sur la pièce portant le pivot d'articulation (11) et en ce que la partie de fixation allongée en saillie sur le côté est un manchon de fixation (9) par lequel le dispositif de palier (7) est emboîté sur l'extrémité libre (6) de la tige d'essuie-glace (4) et est bloqué sur celle-ci.

2. Bras d'essuie-glace suivant la revendication 1, caractérisé en ce que le manchon de fixation (9) comporte au moins un élément d'enclenchement, de préférence un ressort d'enclenchement (18), qui vient en prise avec un élément d'enclenchement correspondant, de préférence un bec d'enclenchement (16), prévu sur la tige d'essuie-glace (4).

3. Bras d'essuie-glace suivant l'une des revendications précédentes, caractérisé en ce que la section transversale libre du manchon de fixation (9) correspond essentiellement à la section transversale de la tige d'essuie-glace (4), des formes profilées (19) en saillie vers l'intérieur sur les faces intérieures du manchon de fixation (9) étant prévues pour la compensation de jeu entre le manchon de fixation (9) et la tige d'essuie-glace (4).

4. Bras d'essuie-glace suivant l'une des revendications précédentes, caractérisé en ce que, sur sa face intérieure, la douille de palier (8) comporte des segments (20) d'un bourrelet annulaire dirigé radialement vers l'intérieur, ces segments pouvant être amenés en prise avec un évidement annulaire correspondant ménagé dans la surface périphérique du pivot d'articulation (11).

5. Bras d'essuie-glace suivant la revendication 4, caractérisé en ce que, dans les zones des segments (20) du bourrelet annulaire, la douille de palier (8) comporte des évidements (21) en forme de segment qui s'étendent de l'extrémité ouverte jusqu'à la face intérieure de l'extrémité fermée de la douille de palier (8) en forme de cuvette et qui, lors du montage de la douille de palier (8) sur le pivot d'articulation (11), permettent aux segments (20) de s'écarter élastiquement dans le sens radial.

6. Bras d'essuie-glace suivant l'une des revendications précédentes, caractérisé en ce qu'à son extrémité ouverte, la douille de palier (8) comporte une ouverture cylindrique (24) plus large et en ce que cette ouverture cylindrique (24) plus large comporte un bourrelet annulaire d'étanchéité (25) qui vient en appui d'une manière étanche sur une partie cylindrique de base (12) plus large du pivot d'articulation (11).

7. Bras d'essuie-glace suivant la revendication 6, caractérisé en ce qu'à son extrémité ouverte, la douille de palier (8) comporte une gorge annulaire (26) qui en fait tout le tour et est ouverte frontalement et qui est disposée coaxialement à l'ouverture cylindrique (24) plus large, cette gorge annulaire (26) permettant au bourrelet annulaire d'étanchéité (25) de s'évaser élastiquement dans le sens radial.

8. Bras d'essuie-glace suivant l'une des revendications précédentes, caractérisé en ce que le dispositif de palier (7) est réalisé dans l'ensemble d'un seul tenant sous forme d'une pièce moulée par injection.
